(19) Europäisches Patentamt
European Patent Office
Office européen des brevets

(11) **EP 3 081 983 B1**

(12) **FASCICULE DE BREVET EUROPEEN**

(45) Date de publication et mention
de la délivrance du brevet:
**07.10.2020 Bulletin 2020/41**

(51) Int Cl.:
***G02F 1/025*** *(2006.01)*

(21) Numéro de dépôt: **16164798.7**

(22) Date de dépôt: **12.04.2016**

(54) **GUIDE D'ONDE POUR MODULATEUR ELECTRO-OPTIQUE DE TYPE CAPACITIF**

WELLENLEITER FÜR ELEKTRO-OPTISCHEN MODULATOR VOM KAPAZITIVEN TYP

WAVEGUIDE FOR CAPACITIVE ELECTRO-OPTICAL MODULATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.04.2015 FR 1553191**

(43) Date de publication de la demande:
**19.10.2016 Bulletin 2016/42**

(73) Titulaires:
• **Commissariat à l'Energie Atomique et aux Energies Alternatives**
**75015 Paris (FR)**
• **CENTRE NATIONAL DE LA RECHERCHE SCIENTIFIQUE**
**75794 Paris Cedex 16 (FR)**
• **Université Paris-Sud**
**91400 Orsay (FR)**

(72) Inventeurs:
• **Abraham, Alexis**
**38130 Echirolles (FR)**
• **Olivier, Ségolène**
**38950 Saint Martin le Vinoux (FR)**
• **Perez-Galacho, Diego**
**94110 Arcueil (FR)**
• **Marris-Morini, Delphine**
**92120 Montrouge (FR)**
• **Vivien, Laurent**
**91430 Vauhallan (FR)**

(74) Mandataire: **GIE Innovation Competence Group**
**310, avenue Berthelot**
**69372 Lyon Cedex 08 (FR)**

(56) Documents cités:
**US-A1- 2003 090 286     US-A1- 2005 089 257**
**US-A1- 2005 189 591     US-A1- 2011 176 762**
**US-A1- 2015 086 149**

**EP 3 081 983 B1**

**Description**

La présente invention a trait à un guide d'onde pour modulateur électro-optique de type capacitif, ainsi qu'à un modulateur électro-optique de type capacitif comportant un tel guide d'onde.

Le guide d'onde est destiné à être couplé à au moins une source lumineuse émettant une onde électromagnétique présentant une direction de propagation, l'onde électromagnétique présentant une longueur d'onde notée À. Le couplage du guide d'onde à la ou chaque source lumineuse peut s'effectuer par divers moyens tels que des composants passifs, des composants actifs, des guides, des fibres optiques etc.

L'état de l'art décrit des modulateurs de type capacitif: US2011/0176762 divulgue un modulateur électro-optique de type capacitif utilisant un guide d'onde dans lequel sont formées des structures PON qui alternent suivant l'axe longitudinal du guide d'onde. US2015/0086149 décrit un coupleur à réseau accordable utilisant des alternances de portions N et P. US2003/0090286 décrit un déphaseur électro-optique de type capacitif comportant des structures capacitives modulables à charge flottante. Un guide d'onde pour modulateur électro-optique de type capacitif connu de l'état de la technique comporte :

- un substrat,
- deux régions semi-conductrices s'étendant sur le substrat suivant une direction correspondant à une direction de propagation d'une onde électromagnétique, les deux régions semi-conductrices étant électriquement dopées d'un premier type de conductivité et d'un second type de conductivité,
- une couche diélectrique formée entre les deux régions semi-conductrices.

Les deux régions semi-conductrices forment des portions de guidage de l'onde électromagnétique. Les deux régions semi-conductrices sont de préférence cristallines. Par «cristalline», on entend une région dans laquelle les atomes ou les molécules sont disposés régulièrement selon un motif cristallographique caractéristique, ce qui exclut donc les régions amorphes. Une région cristalline est donc avantageusement réalisée dans un matériau monocristallin ou polycristallin. Les deux régions semi-conductrices sont avantageusement électriquement dopées de manière à former une capacité avec la couche diélectrique.

Lorsque les deux régions semi-conductrices sont soumises à une différence de potentiel, les porteurs de charge s'accumulent aux interfaces entre la couche diélectrique et les régions semi-conductrices. Cette variation de concentration en porteurs de charge conduit à un phénomène d'électro-réfraction, c'est-à-dire que l'indice de réfraction des régions semi-conductrices varie localement selon la différence de potentiel du champ électrique appliqué. Le champ optique est essentiellement localisé dans la couche diélectrique et à son voisinage, ce qui permet d'obtenir un meilleur recouvrement entre le champ optique et la variation de concentration en porteurs de charge, augmentant ainsi l'efficacité du modulateur électro-optique. Cette variation de l'indice de réfraction des régions semi-conductrices modifie l'indice effectif d'un mode optique se propageant au sein du guide d'onde, et permet d'introduire un déphasage pour une onde électromagnétique se propageant à travers les régions semi-conductrices.

Pour les modulateurs électro-optiques, une structure interférométrique est associée au guide d'onde pour obtenir une modulation d'intensité à partir du déphasage introduit. La structure interférométrique peut être un interféromètre de type Mach-Zehnder, Fabry-Pérot ou un anneau résonnant couplé au guide d'onde.

L'amélioration des performances d'un modulateur électro-optique consiste à optimiser certaines figures de mérite, notamment à réduire la valeur du produit Vπ Lπ afin d'augmenter l'efficacité de modulation, où :

- Vπ est la tension à appliquer entre les deux régions semi-conductrices pour introduire un déphasage de π à l'onde électromagnétique,
- Lπ est la longueur des portions de guidage pour la tension Vπ associée.

A titre d'exemple, pour une longueur Lπ de 1 cm et un modulateur électro-optique ayant un produit Vπ Lπ de 1 V.cm, il est nécessaire d'appliquer 1 V pour obtenir un déphasage de π de l'onde électromagnétique. Comparé à l'état de l'art des modulateurs électro-optiques en silicium, les performances d'un modulateur électro-optique en termes d'efficacité de modulation peuvent être jugées très satisfaisantes lorsque Vπ Lπ < 1 V.cm.

La présente invention vise à augmenter l'efficacité de modulation d'un modulateur électro-optique de type capacitif, et concerne à cet effet un guide d'onde pour modulateur électro-optique de type capacitif comme décrit dans les revendications.

Le réseau de structures élémentaires décrit dans les revendications autorise une propagation de l'onde électromagnétique sans effet de diffraction, et ce malgré la présence de plusieurs interfaces entre une région semi-conductrice et une couche diélectrique au sein du guide d'onde. La ligne de lumière du milieu environnant le réseau est une ligne dans un espace $(\omega, k_{//})$, où $\omega$ est la pulsation de l'onde électromagnétique dans le vide et $k_{//}$ est le vecteur d'onde tangentiel à l'interface entre le réseau et le milieu. La ligne de lumière vérifie l'équation

$\omega = \dfrac{k_{//}c}{n_{env}}$, où c est la vitesse de la lumière dans le vide, et $n_{env}$ est la partie réelle de l'indice effectif du milieu. La ligne de lumière délimite un cône de lumière, au-dessus de la ligne de lumière, où les modes optiques du réseau peuvent se coupler au milieu. Le fait que les modes optiques autorisés par le réseau sont sous la ligne de lumière permet donc d'obtenir une propagation sans effet de diffraction.

Ainsi, le recouvrement entre les zones de variation de concentration en porteurs de charge et le mode optique de propagation est augmenté relativement à l'état de la technique grâce au réseau de structures élémentaires. En d'autres termes, une plus grande fraction du champ optique interagit avec les zones de variation de concentration en porteurs de charge, ce qui permet d'augmenter l'efficacité de modulation.

Les régions semi-conductrices et les couches diélectriques de chaque structure élémentaire forment des portions de guidage de l'onde électromagnétique. Les structures élémentaires forment des capacités. Par « direction de propagation », on entend une direction pouvant être notamment rectiligne pour un guide droit, ou curviligne pour un guide courbe. L'onde électromagnétique est avantageusement une onde monochromatique ou quasi-monochromatique. Les régions semi-conductrices sont avantageusement cristallines. Par « cristalline », on entend une région dans laquelle les atomes ou les molécules sont disposés régulièrement selon un motif caractéristique, ce qui exclut donc les régions amorphes. Une région cristalline est avantageusement réalisée dans un matériau monocristallin ou polycristallin.

Dans un mode de réalisation, le réseau comporte des bandes interdites photoniques définies pour

$$\Lambda_{BI} = \frac{m\lambda}{2 n_{eff}},\ \text{où :}$$

- $\Lambda_{BI}$ est une période spatiale du réseau,
- m est un entier naturel non nul,
- $n_{eff}$ est une partie réelle d'un indice effectif d'un mode optique se propageant suivant la direction de propagation ;

et les structures élémentaires forment des motifs périodiques présentant une période spatiale $\Lambda p$ adaptée de sorte que les modes optiques autorisés par le réseau sont en dehors des bandes interdites photoniques.

Ainsi, une telle période spatiale $\Lambda_p$ du réseau permet d'obtenir des modes optiques se propageant suivant la direction de propagation, et d'éviter l'obtention de modes optiques évanescents.

En outre, le fait que les structures élémentaires forment des motifs périodiques permet de faciliter la fabrication d'un tel guide d'onde.

Selon une forme d'exécution, les structures élémentaires forment des motifs p-périodiques vérifiant :

$$L_{i+p} = L_i\ ;\ et\ \Lambda_p = \sum_{j=0}^{p-1} L_{i+j}$$

où $L_i$ est une dimension d'une i-ème structure élémentaire suivant la direction de propagation.

Selon une forme d'exécution, les structures élémentaires forment des motifs bi-périodiques vérifiant $L_{i+2}$ = $L_i$ ; et $\Lambda_2 = L_A + L_B$.

Avantageusement, la période spatiale $\Lambda_2$ vérifie

$$\Lambda_2 < \lambda/n_{eff}.$$

Ainsi, une telle condition permet d'obtenir des modes optiques en dehors des bandes interdites photoniques avec une marge de sécurité afin de compenser les imprécisions géométriques inévitables lors de la fabrication d'un tel guide d'onde.

Le milieu présente une partie réelle $n_{env}$ d'un indice effectif, l'onde électromagnétique se propageant dans le vide présente un nombre d'onde $k_0$, et les modes optiques autorisés par le réseau présentent un nombre d'onde k vérifiant $k_0/k < 1/n_{env}.$

Ainsi, de tels modes optiques autorisés par le réseau sont situés sous la ligne de lumière, ce qui permet donc d'obtenir une propagation sans effet de diffraction.

En l'absence de propagation dans le milieu environnant le réseau, et considérant un milieu homogène, l'indice effectif s'entend comme l'indice optique du milieu.

Dans un mode de réalisation, chaque couche diélectrique présente :

- une permittivité relative, notée $\varepsilon_r$, et
- une longueur, notée $l_o$, suivant la direction de propagation,

et $l_0$ et $\varepsilon_r$ vérifient la relation $\frac{\varepsilon_r}{l_o} \geq C_s/\varepsilon_0$ , où $C_s$ est une valeur prédéterminée représentative d'une capacité surfacique, et $\varepsilon_0$ est la permittivité du vide.

Pour augmenter l'efficacité du modulateur électro-optique, on recherchera à maximiser la capacité surfacique du guide d'onde, et donc maximiser le rapport $\varepsilon_r / l_0$.

Selon une forme d'exécution, la longueur suivant la direction de propagation de la couche diélectrique de chaque structure élémentaire vérifie la relation 5 *nm* ≤ $l_0$ ≤ 50 *nm,* de préférence 5 *nm* ≤ $l_0$ ≤ 30 *nm,* encore préférentiellement 5 *nm* ≤ $l_0$ ≤ 15 *nm*.

Ainsi, de telles longueurs permettent d'obtenir des performances satisfaisantes du modulateur électro-optique pour un $\varepsilon_r$ donné, en particulier lorsque $\varepsilon_r$ > 3.

Selon une forme d'exécution, la couche diélectrique de chaque structure élémentaire présente :

- une épaisseur, notée $e_0$, et
- une longueur, notée $l_0$, suivant la direction de propagation,

et vérifiant la relation 6 $6 \leq e_0/l_0 \leq 60$ , de préfé-

rence $10 \leq {}^{e_0}/_{l_0} \leq 60$, encore préférentiellement

$$20 \leq {}^{e_0}/_{l_0} \leq 60.$$

Par « épaisseur », on entend une dimension suivant un axe perpendiculaire à une surface de support plane du substrat.

Ainsi, on obtient un guide d'onde à plusieurs fentes verticales, les couches diélectriques formant les fentes. De tels rapports entre l'épaisseur et la longueur de la couche diélectrique permettent une meilleure efficacité, donc un guide d'onde plus compact, et par là-même une diminution des pertes optiques, tout en conservant une bande passante acceptable pour diverses applications.

Selon une forme d'exécution, la couche diélectrique de chaque structure élémentaire est à base d'un matériau sélectionné dans le groupe comportant $SiO_2$, $Si_3N_4$, $HfO_2$.

Ainsi, $HfO_2$ est particulièrement intéressant pour son $\varepsilon_r$ élevée ($\varepsilon_r = 25$) relativement aux autres matériaux de type oxyde. Pour $SiO_2$, $\varepsilon_r = 3,9$ ; pour $Si_3N_4$, $\varepsilon_r = 7,5$. Le rapport $\varepsilon_r / l_0$ est donc plus important avec $HfO_2$, et les performances du modulateur électro-optique sont accrues pour une même longueur de couche diélectrique.

Avantageusement, les régions semi-conductrices sont monocristallines, de préférence à base de silicium monocristallin.

Ainsi, les pertes optiques sont réduites relativement à des régions semi-conductrices polycristallines par exemple.

Selon une forme d'exécution, les régions semi-conductrices présentent un niveau de dopage du premier type de conductivité et du second type de conductivité compris entre $10^{16}$ cm$^{-3}$ et $10^{19}$ cm$^{-3}$, de préférence compris entre $5{\times}10^{16}$ cm$^{-3}$ et $5{\times}10^{18}$ cm$^{-3}$, plus préférentiellement compris entre $10^{17}$ cm$^{-3}$ et $10^{18}$ cm$^{-3}$.

Ainsi, de tels niveaux de dopage permettent d'assurer des performances satisfaisantes du modulateur électro-optique en termes d'efficacité de modulation. Le niveau de dopage est ajusté selon les performances souhaitées. Le niveau de dopage est obtenu par l'introduction d'impuretés de type accepteur ou donneur selon que la région semi-conductrice est dopée de type p ou n.

Dans un mode de réalisation, chaque région semi-conductrice présente une section transversale à la direction de propagation, la section comprenant une embase munie d'une partie saillante.

Ainsi, les régions semi-conductrices forment un guide d'onde nervuré. La partie saillante définit un épaulement qui permet d'améliorer le confinement du mode de propagation relativement à un guide d'onde rectangulaire.

Dans un mode de réalisation, la direction de propagation de l'onde électromagnétique est curviligne, et $L_A$ et $L_B$ sont des abscisses curvilignes calculés à partir d'une zone centrale du guide d'onde.

La présente invention concerne également un modulateur électro-optique de type capacitif comportant un guide d'onde conforme à l'invention.

D'autres caractéristiques et avantages apparaîtront dans la description qui va suivre de différents modes de réalisation de l'invention, donnés à titre d'exemples non limitatifs, en référence aux dessins annexés dans lesquels :

- la figure 1 est une vue schématique en coupe d'un guide d'onde selon l'invention suivant la direction de propagation de l'onde électromagnétique,
- les figures 2 et 3 sont des vues schématiques en perspective de deux modes de réalisation d'un guide d'onde selon l'invention, la couche diélectrique de chaque structure élémentaire n'étant pas représentée,
- la figure 4 est un graphique représentant en abscisse la longueur (en nm) d'une région semi-conductrice d'une structure élémentaire pour une section longitudinale donnée d'un guide selon l'invention, et en ordonnées la longueur (en nm) de la couche diélectrique de la structure élémentaire, le graphique illustrant différents régimes de propagation,
- la figure 5 est un graphique représentant en abscisse le vecteur d'onde k associé à un réseau 1-périodique de structures élémentaires, et en ordonnées le vecteur d'onde $k_0$ associé à la lumière se propageant dans le vide,
- la figure 6 est une vue schématique en coupe d'un guide d'onde selon l'invention avec une direction de propagation curviligne de l'onde électromagnétique.

Pour les différents modes de réalisation, les mêmes références seront utilisées pour des éléments identiques ou assurant la même fonction, par souci de simplification de la description. Les caractéristiques techniques décrites ci-après pour différents modes de réalisation sont à considérer isolément ou selon toute combinaison techniquement possible.

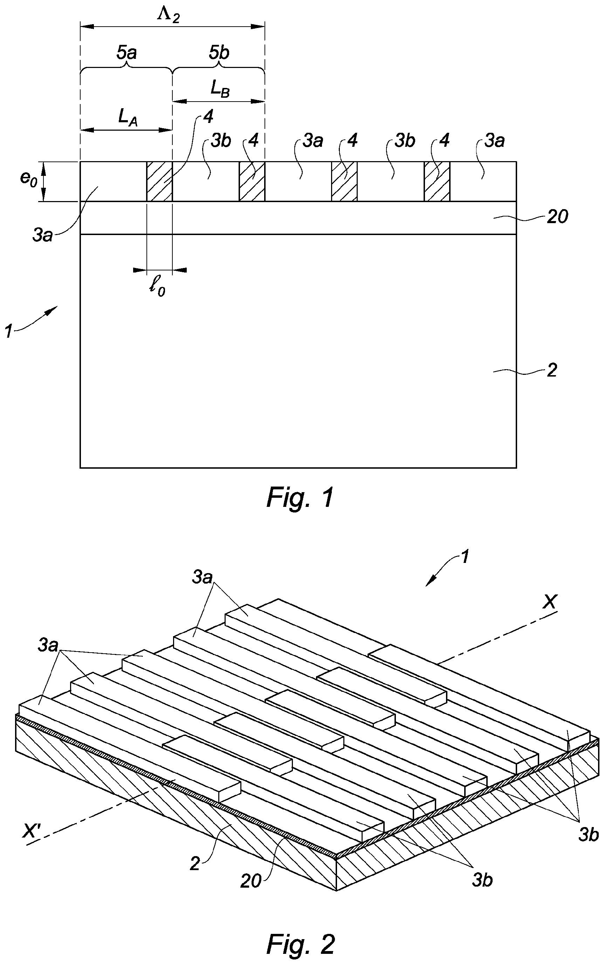

A la figure 1 est illustré un guide d'onde 1 pour modulateur électro-optique de type capacitif, le guide d'onde 1 étant destiné à être couplé à au moins une source lumineuse émettant une onde électromagnétique suivant une direction de propagation X'-X, l'onde électromagnétique présentant une longueur d'onde notée À, le guide d'onde 1 comportant :

- un substrat 2,
- un ensemble de régions semi-conductrices 3a, 3b s'étendant consécutivement sur le substrat 2 suivant la direction de propagation X'-X de l'onde électromagnétique, les régions semi-conductrices 3a, 3b étant électriquement dopées d'un premier type de conductivité et d'un second type de conductivité de manière alternée suivant la direction de propagation X'-X,

- un ensemble de couches diélectriques 4, chaque couche diélectrique 4 étant formée entre deux régions semi-conductrices consécutives 3a, 3b,

l'ensemble de régions semi-conductrices 3a, 3b et l'ensemble de couches diélectriques 4 formant au moins un réseau de structures élémentaires 5a, 5b comprenant consécutivement :

- une première structure élémentaire 5a formée par une région semi-conductrice 3a du premier type de conductivité et une couche diélectrique 4 adjacente, la première structure élémentaire 5a présentant une première dimension, notée $L_A$, suivant la direction de propagation X'-X, et
- une seconde structure élémentaire 5b formée par une région semi-conductrice 3b du second type de conductivité et une couche diélectrique 4 adjacente, la seconde structure élémentaire 5b présentant une seconde dimension, notée $L_B$, suivant la direction de propagation X'-X,
- un milieu environnant le réseau, le milieu présentant une ligne de lumière,

les premières dimensions $L_A$ et les secondes dimensions $L_B$ des structures élémentaires 5a, 5b étant adaptées à λ de sorte que le réseau autorise des modes optiques se propageant suivant la direction de propagation X'-X, et de sorte que les modes optiques autorisés par le réseau sont situés sous la ligne de lumière.

Le substrat 2 est avantageusement de type semi-conducteur sur isolant (SOI) avec une couche d'oxyde enterrée 20. Le substrat 2 est avantageusement à base de silicium. Le milieu environnant le réseau comporte de préférence une couche d'un matériau diélectrique, le matériau diélectrique étant de préférence le dioxyde de silicium. Le milieu comporte la couche d'oxyde enterrée 20.

Les régions semi-conductrices 3a, 3b sont avantageusement cristallines. Par «cristalline», on entend une région dans laquelle les atomes ou les molécules sont disposés régulièrement selon un motif cristallographique caractéristique, ce qui exclut donc les régions amorphes. Les régions semi-conductrices 3a, 3b sont avantageusement monocristallines, de préférence à base de silicium monocristallin. Les régions semi-conductrices 3a, 3b présentent un niveau de dopage du premier type de conductivité et du second type de conductivité compris entre $10^{16}$ cm$^{-3}$ et $10^{19}$ cm$^{-3}$, de préférence compris entre $5 \times 10^{16}$ cm$^{-3}$ et $5 \times 10^{18}$ cm$^{-3}$, plus préférentiellement compris entre $10^{17}$ cm$^{-3}$ et $10^{18}$ cm$^{-3}$. A titre d'exemple, les régions semi-conductrices 3a sont dopées de type p et les régions semi-conductrices 3b sont dopées de type n.

La couche diélectrique 4 de chaque structure élémentaire 5a, 5b est préférentiellement un oxyde. La couche diélectrique 4 de chaque structure élémentaire 5a, 5b est avantageusement à base d'un matériau sélectionné dans le groupe comportant SiO$_2$, Si$_3$N$_4$, HfO$_2$. La couche diélectrique 4 de chaque structure élémentaire 5a, 5b présente :

- une permittivité relative, notée $\varepsilon_r$,
- une épaisseur, notée $e_0$,
- une longueur, notée $l_0$, suivant la direction de propagation X'-X.

Par « épaisseur », on entend une dimension suivant un axe perpendiculaire à une surface de support plane du substrat 2.

Avantageusement, $l_0$ et $\varepsilon_r$ vérifient la relation $\frac{\varepsilon_r}{l_o} \geq \frac{C_s}{\varepsilon_0}$, où $C_s$ est une valeur prédéterminée représentative d'une capacité surfacique, et $\varepsilon_0$ est la permittivité du vide. A titre d'exemple, il a été constaté des performances satisfaisantes du modulateur électro-optique en termes d'efficacité de modulation à partir d'une capacité surfacique $C_s$ supérieure à 2 fF/$\mu$m$^2$ lorsque la couche diélectrique 4 de chaque structure élémentaire 5a, 5b est à base de SiO$_2$. Avantageusement, $e_0$ et $l_0$ vérifient la relation $6 \leq \frac{e_0}{l_0} \leq 60$, de préférence $10 \leq \frac{e_0}{l_0} \leq 60$, encore préférentiellement $20 \leq \frac{e_0}{l_0} \leq 60$. Avantageusement, $l_0$ vérifie la relation 5 $nm \leq l_0 \leq 50$ $nm$, de préférence 5 $nm \leq l_0 \leq 30$ $nm$, encore préférentiellement 5 $nm \leq l_0 \leq 15$ $nm$.

Dans un mode de réalisation, le réseau comporte des bandes interdites photoniques définies pour $\Lambda_{BI} = \frac{m\lambda}{2n_{eff}}$, où :

- $\Lambda_{BI}$ est une période spatiale du réseau,
- m est un entier naturel non nul,
- $n_{eff}$ est une partie réelle d'un indice effectif d'un mode optique se propageant suivant la direction de propagation X'-X.

Les structures élémentaires 5a, 5b forment avantageusement des motifs périodiques présentant une période spatiale $\Lambda_p$ adaptée de sorte que les modes optiques autorisés par le réseau sont en dehors des bandes interdites photoniques. A titre d'exemple, de tels modes optiques peuvent vérifier la relation suivante :

$$n_{eff}(\Lambda_p) \neq m \frac{\lambda}{2\Lambda_p} \pm 10^{-5}.$$

Les structures élémentaires 5a, 5b forment avantageusement des motifs p-périodiques vérifiant :

$$L_{i+p} = L_i \; ; \; et \; \Lambda_p = \sum_{j=0}^{p-1} L_{i+j}$$

où $L_i$ est une dimension d'une i-ème structure élémentaire 5a, 5b suivant la direction de propagation X'-X. Comme illustré à la figure 1, les structures élémentaires 5a, 5b forment des motifs bi-périodiques vérifiant $L_{i+2} = L_i$ ; et $\Lambda_2 = L_A + L_B$.

Le milieu présente une partie réelle $n_{env}$ d'un indice effectif, et l'onde électromagnétique se propageant dans le vide présente un nombre d'onde $k_0$, et les modes optiques autorisés par le réseau présentent un nombre d'onde k vérifiant $k_0/k < 1/n_{env}$.

Selon une forme d'exécution, chaque région semi-conductrice 3a, 3b présente une longueur L identique suivant la direction de propagation X'-X. La couche diélectrique 4 de chaque structure élémentaire 5a, 5b présente une longueur $l_0$ identique suivant la direction de propagation X'-X. Il en résulte $L_A = L_B = L + l_0$ ; et $\Lambda_2 = 2(L + l_0)$. Avantageusement la période spatiale $\Lambda_2$ vérifie $\Lambda_2 < \lambda/n_{eff}$.

En notant « P » (respectivement « N ») une région semi-conductrice 3a, 3b dopée de type p (respectivement de type n) et « O » chaque couche diélectrique 4, l'ensemble de régions semi-conductrices 3a, 3b et les couches diélectriques 4 de la figure 1 s'écrivent PONOPONOP à titre d'exemple non limitatif.

Chaque couple de structures élémentaires 5a, 5b consécutives s'écrit donc PONO ou NOPO. L'ensemble des structures élémentaires 5a, 5b forme la partie active du guide d'onde 1. Bien entendu, l'ensemble de régions semi-conductrices 3a, 3b et les couches diélectriques 4 peuvent comporter un nombre différent de structures élémentaires 5a, 5b. Par exemple, à efficacité de modulation constante exprimée par le produit V$\pi$ L$\pi$, l'augmentation du nombre de structures élémentaires 5a, 5b, donc de L$\pi$, permet de diminuer la tension de fonctionnement du modulateur électro-optique.

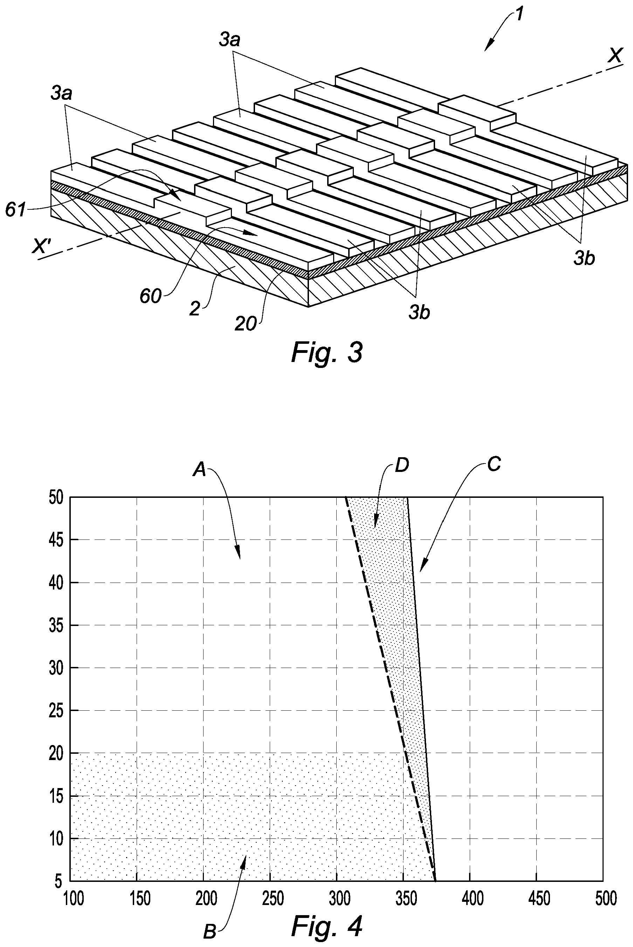

La figure 4 illustre une méthode pour la détermination de la longueur d'une région semi-conductrice 3a, 3b d'une structure élémentaire 5a, 5b à partir d'une longueur $l_0$ de couche diélectrique 4 donnée pour obtenir un réseau adapté. La méthode s'applique au cas simplifié d'une structure 1D similaire à la figure 1 où le formalisme d'une telle structure repose sur un modèle analytique expliqué par exemple dans le document « An introduction to optical Bloch modes » de P. Lalanne (2012).

Pour une longueur d'onde donnée, par exemple $\lambda$=1,55 $\mu$m, il est supposé que l'indice de réfraction des régions semi-conductrices 3a, 3b est égal à l'indice effectif $n_{eff}$ du mode optique se propageant dans la région semi-conductrice 3a ou la région semi-conductrice 3b.

Cette hypothèse permet de réduire un problème 3D à un problème 1D. L'indice effectif du mode optique se propageant suivant la direction de propagation X'-X dans les régions semi-conductrices 3a, 3b est déterminé par une méthode connue de l'homme du métier. Pour une longueur $l_0$ de couche diélectrique 4 et une longueur L de région semi-conductrice 3a, 3b donnée, la résolution du modèle analytique permet d'obtenir une relation du type $n_{eff}$=f($\lambda$,$l_0$,L).

La figure 4 est un résultat de simulation appliquant cette méthode. En résolvant cette équation, un ensemble de couples (L, $l_0$) à une longueur d'onde fixée est obtenu. La figure 4 est un exemple d'abaque que l'on peut obtenir en fonction de L (axe des abscisses) et $l_0$ (axe des ordonnées). Cet abaque permet de définir plusieurs zones de propagation du mode optique dans la structure périodique. Les régions A et C correspondent à un régime de propagation possible où l'ensemble de structures élémentaires 5 forme un réseau où des modes optiques se propageant suivant la direction de propagation X'-X sont autorisés (modes de Bloch). La zone D intercalée entre les régions A et C correspond à une bande interdite photonique définie pour $\Lambda_{BI} = \frac{m\lambda}{2n_{eff}}$, où :

- $\Lambda_{BI}$ est une période spatiale du réseau,
- m est un entier naturel non nul,
- $n_{eff}$ est une partie réelle d'un indice effectif d'un mode optique se propageant suivant la direction de propagation X'-X.

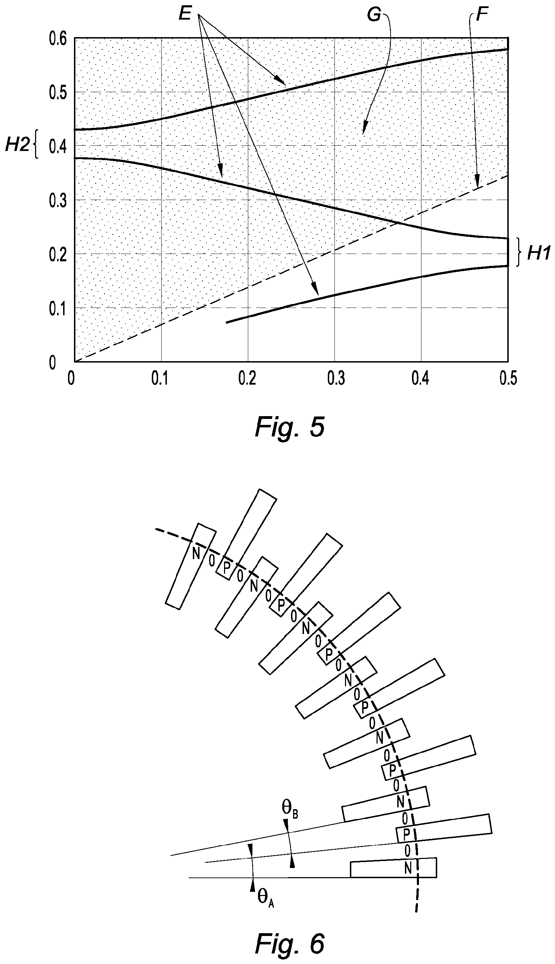

Enfin, les régions A et C comportent une zone B de fonctionnement pour des valeurs de $l_0$ permettant d'atteindre les performances souhaitées du modulateur électro-optique. La valeur maximale de $l_0$ est déterminée préalablement selon la relation $\frac{\varepsilon_r}{l_o} \geq C_s/\varepsilon_0$, comme indiqué ci-avant. Dans le cas de structures plus complexes, 3D par exemple, la détermination de la relation $n_{eff}$=f($\lambda$,$l_0$,L) se fait à l'aide de simulations numériques connues de l'homme du métier. La figure 5 illustre la deuxième partie de la méthode précédente, qui consiste pour une longueur $l_0$ fixée à déterminer la longueur L d'une région semi-conductrice 3a, 3b d'une structure élémentaire 5a, 5b nécessaire pour obtenir un réseau dans lequel la lumière peut se propager sans effet de diffraction. La figure 5 est un résultat de simulation qui permet d'obtenir le nombre d'onde k associé au réseau à partir de la relation $n_{eff}$=f($\lambda$,$l_0$,L) établie précédemment. La figure 5 est un exemple d'abaque que l'on peut obtenir en fonction de k/K (axe des abscisses) et $k_0$/K (axe des ordonnées) où $K = \frac{2\pi}{L+l_0}$. Cet abaque permet de définir plusieurs zones de propagation du mode optique dans le réseau, chacun des points de la courbe correspondant à un cou-

ple ($I_0$, L) donnée. Les zones H1 et H2 correspondent aux bandes interdites photoniques (délimitées par les courbes E) où la lumière ne se propage pas dans le réseau, et où la relation $\Lambda_{BI} = \frac{m\lambda}{2n_{eff}}$ est vérifiée, où :

- $\Lambda_{BI}$ est une période spatiale du réseau,
- m est un entier naturel non nul,
- $n_{eff}$ est une partie réelle d'un indice effectif d'un mode optique se propageant suivant la direction de propagation X'-X.

La zone H1 correspond à m=1 et la zone H2 correspond à m=2. La courbe F trace la relation $k_0$=k/$n_{env}$ (la courbe F est appelée ligne de lumière) et permet de définir la zone G pour laquelle $k_0$/k>1/$n_{env}$ (la zone G est appelée cône de lumière), c'est-à-dire la zone où la lumière se propage dans le réseau avec des effets de diffraction. Dans ces conditions, les valeurs L qui permettent d'obtenir la propagation de la lumière dans le réseau 1-périodique sans effet de diffraction correspondent aux couples ($I_0$, L) associés aux valeurs de la courbe A situées sous la zone C.

Dans le mode de réalisation illustré à la figure 2, chaque région semi-conductrice 3a, 3b présente une section transversale à la direction de propagation X'-X de forme rectangulaire. Le guide d'onde 1 ainsi obtenu est un guide d'onde rectangulaire.

Selon une variante de réalisation illustrée à la figure 3, chaque région semi-conductrice 3a, 3b présente une section transversale à la direction de propagation X'-X, la section comprenant une embase 60 munie d'une partie saillante 61. Le guide d'onde 1 ainsi obtenu est un guide d'onde nervuré.

Dans le mode de réalisation illustré à la figure 6, la direction de propagation X'-X de l'onde électromagnétique est curviligne, et $L_A$ et $L_B$ sont des abscisses curvilignes calculés à partir d'une zone centrale du guide d'onde 1. A titre d'exemple, dans le cas d'un guide d'onde circulaire de rayon R, les abscisses curvilignes $L_A$ et $L_B$ sont définies à partir des angles $\theta_A$ et $\theta_B$, tels que $L_A$ =R $\theta_A$ et $L_B$ =R $\theta_B$. Les structures élémentaires 5a, 5b sont définies de manière radiale.

Un procédé de fabrication d'un guide d'onde 1 conforme à l'invention comporte les étapes :

a) prévoir un substrat 2 comportant successivement une couche d'isolant électrique 20 et une couche semi-conductrice, la couche semi-conductrice étant de préférence cristalline,
b) former une pluralité de tranchées dans la couche semi-conductrice de manière à mettre à nu la couche d'isolant électrique 20 et délimiter un ensemble de régions semi-conductrices 3a, 3b s'étendant consécutivement sur le substrat 2 suivant une direction de propagation X'-X d'une onde électromagnétique présentant une longueur d'onde notée $\lambda$,

c) former une couche diélectrique 4 entre deux régions semi-conductrices 3a, 3b consécutives,
d) doper électriquement l'ensemble de régions semi-conductrices 3a, 3b selon un premier type de conductivité et un second type de conductivité de manière alternée suivant la direction de propagation X'-X.

L'ensemble de régions semi-conductrices 3a, 3b et les couches diélectriques 4 forment un réseau de structures élémentaires 5a, 5b consécutives comprenant :

- une première structure élémentaire 5a formée par une région semi-conductrice 3a du premier type de conductivité et une couche diélectrique 4 adjacente, la première structure élémentaire 5a présentant une première dimension, notée $L_A$, suivant la direction de propagation X'-X, et
- une seconde structure élémentaire 5b formée par une région semi-conductrice 3b du second type de conductivité et une couche diélectrique 4 adjacente, la seconde structure élémentaire 5b présentant une seconde dimension, notée $L_B$, suivant la direction de propagation X'-X.

Le réseau est environné par un milieu présentant une ligne de lumière. Le milieu comporte notamment la couche d'isolant électrique 20. Le milieu présente une partie réelle $n_{env}$ d'un indice effectif. L'onde électromagnétique se propageant dans le vide présente un nombre d'onde $k_0$.

La pluralité de tranchées formées lors de l'étape b) est dimensionnée de sorte que les premières dimensions $L_A$ et les secondes dimensions $L_B$ des structures élémentaires 5a, 5b sont adaptées à $\lambda$ afin que le réseau autorise des modes optiques se propageant suivant la direction de propagation X'-X, et que les modes optiques autorisés par le réseau sont situés sous la ligne de lumière. Les modes optiques autorisés par le réseau présentent un nombre d'onde k vérifiant $k_0/k < 1/n_{env}$.

Selon un mode de mise en œuvre, le réseau comporte des bandes interdites photoniques définies pour $\Lambda_{BI} = \frac{m\lambda}{2n_{eff}}$, où :

- $\Lambda_{BI}$ est une période spatiale du réseau,
- m est un entier naturel non nul,
- $n_{eff}$ est une partie réelle d'un indice effectif d'un mode optique se propageant suivant la direction de propagation X'-X.

La pluralité de tranchées formées lors de l'étape b) est dimensionnée de sorte que les structures élémentaires 5a, 5b forment des motifs périodiques présentant une période spatiale $\Lambda_p$ adaptée de sorte que les modes optiques autorisés par le réseau sont en dehors des bandes interdites photoniques.

Selon un mode de mise en œuvre, la pluralité de tranchées formées lors de l'étape b) est dimensionnée pour que les structures élémentaires 5a, 5b forment des motifs p-périodiques vérifiant :

$$L_{i+p} = L_i \; ; et \; \Lambda_p = \sum_{j=0}^{p-1} L_{i+j}$$

où $L_i$ est une dimension d'une i-ème structure élémentaire 5a, 5b suivant la direction de propagation X'-X.

Selon un mode de mise en œuvre, la pluralité de tranchées formées lors de l'étape b) est dimensionnée de sorte que les structures élémentaires 5a, 5b forment des motifs bi-périodiques vérifiant $L_{i+2} = L_i$ ; et $\Lambda_2 = L_A + L_B$. Avantageusement, la période spatiale $\Lambda_2$ vérifie

$$\Lambda_2 < \lambda/n_{eff}.$$

Avantageusement, la couche diélectrique 4 de chaque structure élémentaire 5 formée lors de l'étape c) présente :

- une permittivité relative, notée $\varepsilon_r$, et
- une longueur, notée $l_o$, suivant la direction de propagation X'-X,

et la pluralité de tranchées formées lors de l'étape b) sont dimensionnées pour que $l_0$ vérifie la relation $\frac{\varepsilon_r}{l_o} \geq C_s/\varepsilon_0$ , où $C_s$ est une valeur prédéterminée représentative d'une capacité surfacique, et $\varepsilon_0$ est la permittivité du vide.

La formation d'une tranchée lors de l'étape b) et la formation d'une couche diélectrique entre deux régions semi-conductrices consécutives peuvent être exécutées de manière analogue au procédé décrit dans le document EP 2 463 695.

Selon un mode de mise en œuvre, la couche diélectrique 4 de chaque structure élémentaire 5 présente :

- une épaisseur, notée $e_0$, et
- une longueur, notée $l_0$, suivant la direction de propagation X'-X,

et vérifiant la relation $6 \leq e_0/l_0 \leq 60$ , de préférence

$10 \leq e_0/l_0 \leq 60,$ encore préférentiellement

$20 \leq e_0/l_0 \leq 60.$

Pour une telle géométrie de la couche diélectrique 4, chaque tranchée formée lors de l'étape b) est avantageusement configurée de sorte qu'une zone semi-conductrice forme une couche germe s'étendant sur une épaisseur strictement inférieure à l'épaisseur de la couche semi-conductrice. Par « couche germe », on entend une couche mince formant un support de croissance épitaxiale d'un matériau cristallin. Une région semi-conductrice 3a, 3b est ensuite formée par épitaxie à partir de ladite zone semi-conductrice formant la couche germe. La formation de telles tranchées lors de l'étape b) peut être obtenue par une surgravure, et est connue sous le nom de « trenching » en langue anglaise, décrite par exemple dans le livre intitulé « Plasma Etching in Microelectronics », N. Layadi et al., 2001. La formation d'une tranchée lors de l'étape b) peut être exécutée de manière analogue au procédé décrit dans le document FR 14/57748. L'étape d) comporte avantageusement les étapes :

    d1) doper électriquement selon le premier type de conductivité la couche semi-conductrice avant l'étape b),
    d2) doper électriquement selon le second type de conductivité les régions semi-conductrices formées par épitaxie après l'étape c).

## Revendications

1. Modulateur électro-optique de type capacitif comportant un guide d'onde (1) pour modulateur électro-optique de type capacitif, le guide d'onde (1) étant destiné à être couplé à au moins une source lumineuse émettant une onde électromagnétique suivant une direction de propagation (X'-X), l'onde électromagnétique présentant une longueur d'onde notée λ, le guide d'onde (1) comportant :

    - un substrat (2, 20) possédant une couche d'oxyde (20) ayant une première surface ;
    - un ensemble de régions semi-conductrices (3a, 3b) s'étendant consécutivement sur le substrat (2, 20) suivant la direction de propagation (X'-X) de l'onde électromagnétique, les régions semi-conductrices (3a, 3b) étant électriquement dopées d'un premier type de conductivité et d'un second type de conductivité de manière alternée suivant la direction de propagation (X'-X) ;
    - un ensemble de couches diélectriques (4), chaque couche diélectrique (4) étant formée entre deux régions semi-conductrices (3a, 3b) consécutives ;
    l'ensemble de régions semi-conductrices (3a, 3b) et l'ensemble de couches diélectriques (4) formant un réseau de structures élémentaires (5a, 5b) comprenant consécutivement une première structure élémentaire (5a) formée par une région semi-conductrice (3a) du premier type de conductivité et une couche diélectrique (4) adjacente, et une seconde structure élémentaire (5b) formée par une région semi-conductrice (3b) du second type de conductivité et une couche diélectrique (4) adjacente ; les première et seconde structures élémentaires (5a, 5b) présentant respectivement des première et seconde dimensions $L_A$, $L_B$ suivant la direction de propagation (X'-X),

- un milieu environnant le réseau, le milieu présentant une partie réelle $n_{env}$ d'un indice effectif ;

les premières dimensions $L_A$ et les secondes dimensions $L_B$ des structures élémentaires (5a, 5b) étant adaptées à $\lambda$ de sorte que le réseau autorise des modes optiques se propageant suivant la direction de propagation (X'-X), et de sorte que les modes optiques autorisés par le réseau présentent un nombre d'onde k vérifiant

$$\frac{k_0}{k} < \frac{1}{n_{env}},$$ où ko est le nombre d'onde de l'onde électromagnétique se propageant dans le vide ;

**caractérisé en ce que** l'ensemble de régions semi-conductrices (3a, 3b) est monocristalline, et possède une interface avec la première surface de la couche d'oxyde (20).

2. Modulateur électro-optique selon la revendication 1, **caractérisé en ce que** le réseau comporte des bandes interdites photoniques définies pour

$$\Lambda_{BI} = \frac{m\lambda}{2n_{eff}},$$ où :

- $\Lambda_{BI}$ est une période spatiale du réseau,
- m est un entier naturel non nul,
- $n_{eff}$ est une partie réelle d'un indice effectif d'un mode optique se propageant suivant la direction de propagation (X'-X) ;

et **en ce que** les structures élémentaires (5a, 5b) forment des motifs périodiques présentant une période spatiale $\Lambda_p$ adaptée de sorte que les modes optiques autorisés par le réseau sont en dehors des bandes interdites photoniques.

3. Modulateur électro-optique selon la revendication 2, **caractérisé en ce que** les structures élémentaires (5a, 5b) forment des motifs p-périodiques vérifiant :

$$L_{i+p} = L_i \; ; et \; \Lambda_p = \sum_{j=0}^{p-1} L_{i+j}$$

où Li est une dimension d'une i-ème structure élémentaire (5a, 5b) suivant la direction de propagation (X'-X).

4. Modulateur électro-optique selon la revendication 3, **caractérisé en ce que** les structures élémentaires (5a, 5b) forment des motifs bi-périodiques vérifiant $L_{i+2} = L_i$ ; et $\Lambda_2 = L_A + L_B$.

5. Modulateur électro-optique selon la revendication 4, **caractérisé en ce que** la période spatiale $\Lambda_2$ vérifie

$$\Lambda_2 < \frac{\lambda}{n_{eff}}.$$

6. Modulateur électro-optique selon l'une des revendications 1 à 5, **caractérisé en ce que** chaque couche diélectrique (4) présente :

- une permittivité relative, notée $\varepsilon_r$, et
- une longueur, notée $l_o$, suivant la direction de propagation (X'-X),

et **en ce que** $l_0$ et $\varepsilon_r$ vérifient la relation

$$\frac{\varepsilon_r}{l_o} \geq \frac{C_s}{\varepsilon_0},$$ où $C_s$ est une valeur de capacité surfacique supérieure à 2fF/$\mu$M², et $\varepsilon_0$ est la permittivité du vide.

7. Modulateur électro-optique selon l'une des revendications précédentes, **caractérisé en ce que** chaque couche diélectrique (4) présente :

- une permittivité relative, notée $\varepsilon_r$, et
- une longueur, notée $l_o$, suivant la direction de propagation (X'-X),

et **en ce que** $l_0$ et $\varepsilon_r$ vérifient la relation

$$\frac{\varepsilon_r}{l_o} \geq \frac{C_s}{\varepsilon_0},$$ où $C_s$ est une valeur de capacité surfacique supérieure à 2fF/$\mu$m² et $\varepsilon_0$ est la permittivité du vide,

et **en ce que** la longueur suivant la direction de propagation (X'-X) de la couche diélectrique (4) de chaque structure élémentaire (5a, 5b) vérifie la relation $5 \; nm \leq l_0 \leq 50$ nm, de préférence $5 \; nm \leq l_0 \leq 30$ nm, encore préférentiellement $5 \; nm \leq l_0 \leq 15$ nm.

8. Modulateur électro-optique selon l'une des revendications 1 à 7, **caractérisé en ce que** la couche diélectrique (4) de chaque structure élémentaire (5a, 5b) présente :

- une épaisseur, notée $e_0$, et

- une longueur, notée $l_0$, suivant la direction de propagation (X'-X),

et vérifiant la relation $6 \leq \frac{e_0}{l_0} \leq 60$ , de

préférence $10 \leq {}^{e_0}/_{l_0} \leq 60$, encore préférentiellement $20 \leq {}^{e_0}/_{l_0} \leq 60$.

**9.** Modulateur électro-optique selon l'une des revendications 1 à 8, **caractérisé en ce que** les régions semi-conductrices (3a, 3b) sont à base de silicium monocristallin.

**10.** Modulateur électro-optique selon l'une des revendications 1 à 9, **caractérisé en ce que** les régions semi-conductrices (3a, 3b) présentent un niveau de dopage du premier type de conductivité et du second type de conductivité compris entre $10^{16}$ cm$^{-3}$ et $10^{19}$ cm$^{-3}$, de préférence compris entre $5 \times 10^{16}$ cm$^{-3}$ et $5 \times 10^{18}$ cm$^{-3}$, plus préférentiellement compris entre $10^{17}$ cm$^{-3}$ et $10^{18}$ cm$^{-3}$.

**11.** Modulateur électro-optique selon l'une des revendications 1 à 10, **caractérisé en ce que** chaque région semi-conductrice (3a, 3b) présente une section transversale à la direction de propagation (X'-X), la section comprenant une embase (60) munie d'une partie saillante (61).

**12.** Modulateur électro-optique selon l'une des revendications 1 à 11, **caractérisé en ce que** la direction de propagation (X'-X) de l'onde électromagnétique est curviligne, et **en ce que** $L_A$ et $L_B$ sont des abscisses curvilignes calculés à partir d'une zone centrale du guide d'onde (1).

**13.** Modulateur électro-optique selon l'une des revendications précédentes, **caractérisé en ce que** chaque couche diélectrique (4) présente :

- une permittivité relative, notée $\varepsilon_r$, et
- une longueur, notée $l_o$, suivant la direction de propagation (X'-X),

et **en ce que** $l_0$ et $\varepsilon_r$ vérifient la relation

$$\frac{\varepsilon_r}{l_o} \geq {}^{C_s}/_{\varepsilon_0},$$ où $C_s$ est une valeur de capacité surfacique supérieure à 2fF/$\mu$m$^2$ et $\varepsilon_0$ est la permittivité du vide,

et **en ce que** la longueur suivant la direction de propagation (X'-X) de la couche diélectrique (4) de chaque structure élémentaire (5a, 5b) vérifie la relation 5 $nm \leq l_0 \leq 50$ $nm$,

et **en ce que** chaque couche diélectrique (4) vérifie la relation $6 \leq {}^{e_0}/_{l_0} \leq 60$.

**Patentansprüche**

**1.** Elektrooptischer Modulator vom kapazitiven Typ, welcher einen Wellenleiter (1) für einen elektrooptischen Modulator vom kapazitiven Typ umfasst, wobei der Wellenleiter (1) dazu bestimmt ist, mit wenigstens einer Lichtquelle gekoppelt zu werden, die eine elektromagnetische Welle in einer Ausbreitungsrichtung (X'-X) aussendet, wobei die elektromagnetische Welle eine mit $\lambda$ bezeichnete Wellenlänge aufweist, wobei der Wellenleiter (1) umfasst:

- ein Substrat (2, 20), das eine Oxidschicht (20) besitzt, die eine erste Oberfläche aufweist;
- eine Anordnung von halbleitenden Bereichen (3a, 3b), die sich in der Ausbreitungsrichtung (X'-X) der elektromagnetischen Welle nacheinander auf dem Substrat (2, 20) erstrecken, wobei die halbleitenden Bereiche (3a, 3b) in der Ausbreitungsrichtung (X'-X) abwechselnd elektrisch gemäß einem ersten Leitfähigkeitstyp und einem zweiten Leitfähigkeitstyp dotiert sind;
- eine Anordnung von dielektrischen Schichten (4), wobei jede dielektrische Schicht (4) zwischen zwei aufeinander folgenden halbleitenden Bereichen (3a, 3b) ausgebildet ist;
wobei die Anordnung von halbleitenden Bereichen (3a, 3b) und die Anordnung von dielektrischen Schichten (4) ein Netz von elementaren Strukturen (5a, 5b) bilden, das nacheinander eine erste elementare Struktur (5a), die von einem halbleitenden Bereich (3a) des ersten Leitfähigkeitstyps und einer benachbarten dielektrischen Schicht (4) gebildet wird, und eine zweite elementare Struktur (5b), die von einem halbleitenden Bereich (3b) des zweiten Leitfähigkeitstyps und einer benachbarten dielektrischen Schicht (4) gebildet wird, umfasst; wobei die erste und die zweite elementare Struktur (5a, 5b) eine erste bzw. zweite Abmessung $L_A$, $L_B$ in der Ausbreitungsrichtung (X'-X) aufweisen,
- ein das Netz umgebendes Medium, wobei das Medium einen Realteil $n_{env}$ eines effektiven Index aufweist;
wobei die ersten Abmessungen $L_A$ und die zweiten Abmessungen $L_B$ der elementaren Strukturen (5a, 5b) an $\lambda$ angepasst sind, derart, dass das Netz zulässt, dass sich optische Moden in der Ausbreitungsrichtung (X'-X) ausbreiten, und derart, dass die von dem Netz zugelassenen optischen Moden eine Wellenzahl k aufweisen, für

die ${}^{k_0}/_{k} < {}^{1}/_{n_{env}}$ gilt, wobei $k_0$ die Wellenzahl

der elektromagnetischen Welle ist, die sich im Vakuum ausbreitet;
**dadurch gekennzeichnet, dass** die Anordnung von halbleitenden Bereichen (3a, 3b) monokristallin ist und eine Grenzfläche mit der ersten Fläche der Oxidschicht (20) besitzt.

2. Elektrooptischer Modulator nach Anspruch 1, **dadurch gekennzeichnet, dass** das Netz photonische Bandlücken aufweist, die für $\Lambda_{BI} = \dfrac{m\lambda}{2n_{eff}}$ definiert sind, wobei:

   - $\Lambda_{BI}$ eine räumliche Periode des Netzes ist,
   - m eine von null verschiedene natürliche Zahl ist,
   - $n_{eff}$ ein Realteil eines effektiven Index einer optischen Mode ist, die sich in der Ausbreitungsrichtung (X'-X) ausbreitet;
   und dadurch, dass die elementaren Strukturen (5a, 5b) periodische Muster bilden, die eine räumliche Periode $\Lambda p$ aufweisen, die so beschaffen ist, dass sich die von dem Netz zugelassenen optischen Moden außerhalb der photonischen Bandlücken befinden.

3. Elektrooptischer Modulator nach Anspruch 2, **dadurch gekennzeichnet, dass** die elementaren Strukturen (5a, 5b) p-periodische Muster bilden, für die gilt:

$$L_{i+p} = L_i; \text{ und } \Lambda_p = \sum_{j=0}^{p-1} L_{i+j} ,$$

wobei Li eine Abmessung einer i-ten elementaren Struktur (5a, 5b) in der Ausbreitungsrichtung (X'-X) ist.

4. Elektrooptischer Modulator nach Anspruch 3, **dadurch gekennzeichnet, dass** die elementaren Strukturen (5a, 5b) biperiodische Muster bilden, für die gilt: $Li_{+2} = L_i$; und $A2 = L_A + L_B$.

5. Elektrooptischer Modulator nach Anspruch 4, **dadurch gekennzeichnet, dass** für die räumliche Periode $\Lambda_2$ gilt: $\Lambda_2 < \dfrac{\lambda}{n_{eff}}$ .

6. Elektrooptischer Modulator nach einem der Ansprüche 1 bis 5, **dadurch gekennzeichnet, dass** jede dielektrische Schicht (4) aufweist:

   - eine relative Permittivität, mit $\varepsilon_r$ bezeichnet, und

   - eine Länge in der Ausbreitungsrichtung (X'-X), mit lo bezeichnet,

und dadurch, dass $l_0$ und $\varepsilon_r$ der Beziehung $\dfrac{\varepsilon_r}{l_0} \geq \dfrac{C_s}{\varepsilon_0}$ genügen, wobei $C_s$ ein Flächenkapazitätswert ist, der größer als 2 fF/$\mu$m$^2$ ist, und $\varepsilon_0$ die Permittivität des Vakuums ist.

7. Elektrooptischer Modulator nach einem der vorhergehenden Ansprüche, **dadurch gekennzeichnet, dass** jede dielektrische Schicht (4) aufweist:

   - eine relative Permittivität, mit $\varepsilon_r$ bezeichnet, und
   - eine Länge in der Ausbreitungsrichtung (X'-X), mit $l_0$ bezeichnet,
   und dadurch, dass $l_0$ und $\varepsilon_r$ der Beziehung $\dfrac{\varepsilon_r}{l_0} \geq \dfrac{C_s}{\varepsilon_0}$ genügen, wobei $C_s$ ein Flächenkapazitätswert ist, der größer als 2 fF/$\mu$m$^2$ ist, und $\varepsilon_0$ die Permittivität des Vakuums ist,
   und dadurch, dass die Länge der dielektrischen Schicht (4) jeder elementaren Struktur (5a, 5b) in der Ausbreitungsrichtung (X'-X) der Beziehung 5 nm $\leq l_0 \leq$ 50 nm, vorzugsweise 5 nm $\leq l_0 \leq$ 30 nm, noch stärker bevorzugt 5 nm $\leq l_0 \leq$ 15 nm genügt.

8. Elektrooptischer Modulator nach einem der Ansprüche 1 bis 7, **dadurch gekennzeichnet, dass** die dielektrische Schicht (4) jeder elementaren Struktur (5a, 5b) aufweist:

   - eine Dicke, mit eo bezeichnet, und
   - eine Länge in der Ausbreitungsrichtung (X'-X), mit $l_0$ bezeichnet,

und der Beziehung $6 \leq \dfrac{e_0}{l_0} \leq 60$, vorzugsweise $10 \leq \dfrac{e_0}{l_0} \leq 60$, noch stärker bevorzugt $20 \leq \dfrac{e_0}{l_0} \leq 60$ genügt.

9. Elektrooptischer Modulator nach einem der Ansprüche 1 bis 8, **dadurch gekennzeichnet, dass** die halbleitenden Bereiche (3a, 3b) auf monokristallinem Silicium basieren.

10. Elektrooptischer Modulator nach einem der Ansprüche 1 bis 9, **dadurch gekennzeichnet, dass** die halbleitenden Bereiche (3a, 3b) einen Dotierungsgrad des ersten Leitfähigkeitstyps und des zweiten Leitfähigkeitstyps zwischen $10^{16}$ cm$^{-3}$ und $10^{19}$ cm$^{-3}$, vorzugsweise zwischen 5 x $10^{16}$ cm$^{-3}$ und 5 x

$10^{18}$ cm$^{-3}$, stärker bevorzugt zwischen $10^{17}$ cm$^{-3}$ und $10^{18}$ cm$^{-3}$ aufweisen.

11. Elektrooptischer Modulator nach einem der Ansprüche 1 bis 10, **dadurch gekennzeichnet, dass** jeder halbleitende Bereich (3a, 3b) einen Schnitt quer zur Ausbreitungsrichtung (X'-X) aufweist, wobei der Schnitt einen Sockel (60) umfasst, der mit einem vorstehenden Teil (61) ausgestattet ist.

12. Elektrooptischer Modulator nach einem der Ansprüche 1 bis 11, **dadurch gekennzeichnet, dass** die Ausbreitungsrichtung (X'-X) der elektromagnetischen Welle gekrümmt ist, und dadurch, dass $L_A$ und $L_B$ krummlinige Abszissen sind, die ausgehend von einem zentralen Bereich des Wellenleiters (1) berechnet werden.

13. Elektrooptischer Modulator nach einem der vorhergehenden Ansprüche, **dadurch gekennzeichnet, dass** jede dielektrische Schicht (4) aufweist:

- eine relative Permittivität, mit $\varepsilon_r$ bezeichnet, und
- eine Länge in der Ausbreitungsrichtung (X'-X), mit $l_0$ bezeichnet,

und dadurch, dass $l_0$ und $\varepsilon_r$ der Beziehung

$$\frac{\varepsilon_r}{l_0} \geq \frac{C_s}{\varepsilon_0}$$ genügen, wobei $C_s$ ein Flächenkapazitätswert ist, der größer als 2 fF/$\mu$m$^2$ ist, und $\varepsilon_0$ die Permittivität des Vakuums ist,

und dadurch, dass die Länge der dielektrischen Schicht (4) jeder elementaren Struktur (5a, 5b) in der Ausbreitungsrichtung (X'-X) der Beziehung 5 nm $\leq l_0 \leq$ 50 nm genügt,

und dadurch, dass jede dielektrische Schicht (4) der Beziehung $6 \leq \dfrac{e_0}{l_0} \leq 60$ genügt.

## Claims

1. Capacitive electro-optical modulator comprising a capacitive-electro-optical-modulator waveguide (1), the waveguide (1) being intended to be coupled to at least one light source that emits an electromagnetic wave in a propagation direction (X'-X), the electromagnetic wave having a wavelength denoted $\lambda$, the waveguide (1) comprising:

- a substrate (2, 20) possessing an oxide layer (20) having a first surface;
- a set of semiconductor regions (3a, 3b) consecutively extending over the substrate (2, 20) in the propagation direction (X'-X) of the electromagnetic wave, the semiconductor regions (3a, 3b) being electrically doped a first conductivity type and a second conductivity type alternately in the propagation direction (X'-X);
- a set of dielectric layers (4), each dielectric layer (4) being formed between two consecutive semiconductor regions (3a, 3b);

the set of semiconductor regions (3a, 3b) and the set of dielectric layers (4) forming a grating of elementary structures (5a, 5b) consecutively comprising a first elementary structure (5a) formed by a semiconductor region (3a) of the first conductivity type and an adjacent dielectric layer (4), and a second elementary structure (5b) formed by a semiconductor region (3a) of the second conductivity type and an adjacent dielectric layer (4), the first and second elementary structures (5a, 5b) having first and second dimensions $L_A$, $L_B$ in the propagation direction (X'-X), respectively;

- a medium surrounding the grating, the medium having a real part $n_{env}$ of an effective index;

the first dimensions $L_A$ and the second dimensions $L_B$ of the elementary structures (5a, 5b) being matched to $\lambda$ so that the grating permits optical modes propagating in the propagation direction (X'-X), and so that the optical modes permitted by the grating have a wavenumber k

respecting $\dfrac{k_0}{k} < \dfrac{1}{n_{env}}$, where $k_0$ is the wavenumber of the electromagnetic wave in free space;

**characterized in that** the set of semiconductor regions (3a, 3b) is single-crystal, and possesses an interface with the first surface of the oxide layer (20).

2. Electro-optical modulator according to Claim 1, **characterized in that** the grating comprises defined

photonic bandgaps for $\Lambda_{BI} = \dfrac{m\lambda}{2n_{eff}}$, where

- $\Lambda_{BI}$ is a spatial period of the grating,
- m is a non-zero natural integer,
- $n_{eff}$ is a real part of an effective index of an optical mode propagating in the propagation direction (X'-X);

and **in that** the elementary structures (5a, 5b) form periodic patterns having a spatial period $\Lambda_p$ such that the optical modes permitted by the grating are outside the photonic bandgaps.

3. Electro-optical modulator according to Claim 2, **characterized in that** the elementary structures (5a, 5b) form p-periodic patterns respecting:

$$L_{i+p} = L_i; \text{ and } \Lambda_p = \sum_{j=0}^{p-1} L_{i+j}$$

where $L_i$ is a dimension of an ith elementary structure (5a, 5n) in the propagation direction (X'-X).

**4.** Electro-optical modulator according to Claim 3, **characterized in that** the elementary structures (5a, 5b) form bi-periodic patterns respecting $L_{i+2} = L_i$; and $\Lambda_2 = L_A + L_B$.

**5.** Electro-optical modulator according to Claim 4, **characterized in that** the spatial period $\Lambda_2$ respects

$$\Lambda_2 < \lambda/n_{env}.$$

**6.** Electro-optical modulator according to one of Claims 1 to 5, **characterized in that** each dielectric layer (4) has:

- a relative permittivity, denoted $\varepsilon_r$, and
- a length, denoted $l_0$, in the propagation direction (X'-X),

and **in that** $l_0$ and $\varepsilon_r$ respect the relationship

$\frac{\varepsilon_r}{l_0} \geq \frac{C_s}{\varepsilon_0}$, where $C_s$ is a capacitance per unit area higher than 2fF/$\mu$m$^2$, and $\varepsilon_0$ is the permittivity of free space.

**7.** Electro-optical modulator according to one of the preceding claims, **characterized in that** each dielectric layer (4) has:

- a relative permittivity, denoted $\varepsilon_r$, and
- a length, denoted $l_0$, in the propagation direction (X'-X),

and **in that** $l_0$ and $\varepsilon_r$ respect the relationship

$\frac{\varepsilon_r}{l_0} \geq \frac{C_s}{\varepsilon_0}$, where $C_s$ is a capacitance per unit area higher than 2fF/$\mu$m$^2$, and $\varepsilon_0$ is the permittivity of free space,

and **in that** the length in the propagation direction (X'-X) of the dielectric layer (4) of each elementary structure (5a, 5b) respects the relationship 5 $nm \leq l_0 \leq 50$ $nm$, preferably 5 $nm \leq l_0 \leq 30$ $nm$, and more preferably 5 $nm \leq l_0 \leq 15$ $nm$.

**8.** Electro-optical modulator according to one of Claims 1 to 7, **characterized in that** the dielectric layer (4) of each elementary structure (5a, 5b) has:

- a thickness, denoted $e_0$, and
- a length, denoted $l_0$, in the propagation direction (X'-X),
and respecting the relationship

$6 \leq e_0/l_0 \leq 60,$ preferably

$10 \leq e_0/l_0 \leq 60,$ and more preferably

$20 \leq e_0/l_0 \leq 60.$

**9.** Electro-optical modulator according to one of Claims 1 to 8, **characterized in that** the semiconductor regions (3a, 3b) are based on single-crystal silicon.

**10.** Electro-optical modulator according to one of Claims 1 to 9, **characterized in that** the semiconductor regions (3a, 3b) have a density of dopants of the first conductivity type and of the second conductivity type comprised between $1 \times 10^{16}$ cm$^{-3}$ and $1 \times 10^{19}$ cm$^{-3}$, preferably comprised between $5 \times 10^{16}$ cm$^{-3}$ and $5 \times 10^{18}$ cm$^{-3}$, and more preferably comprised between $1 \times 10^{17}$ cm$^{-3}$ and $1 \times 10^{18}$ cm$^{-3}$.

**11.** Electro-optical modulator according to one of Claims 1 to 10, **characterized in that** each semiconductor region (3a, 3b) has a cross section in the propagation direction (X'-X), the cross section comprising a base (60) endowed with a protruding portion (61).

**12.** Electro-optical modulator according to one of Claims 1 to 11, **characterized in that** the propagation direction (X'-X) of the electromagnetic wave is curvilinear, and **in that** $L_A$ and $L_B$ are curvilinear abscissas computed from a central zone of the waveguide (1).

**13.** Electro-optical modulator according to one of the preceding claims, **characterized in that** each dielectric layer (4) has:

- a relative permittivity, denoted $\varepsilon_r$, and
- a length, denoted $l_0$, in the propagation direction (X'-X),

and **in that** $l_0$ and $\varepsilon_r$ respect the relationship

$\frac{\varepsilon_r}{l_0} \geq \frac{C_s}{\varepsilon_0}$, where $C_s$ is a capacitance per unit area higher than 2fF/$\mu$m$^2$, and $\varepsilon_0$ is the permittivity of free space,

and **in that** the length in the propagation direction (X'-X) of the dielectric layer (4) of each elementary structure (5a, 5b) respects the relationship 5 $nm \leq l_0 \leq 50$ $nm$, and **in that** each dielectric layer (4) respects the relationship

$6 \leq e_0/l_0 \leq 60.$

Fig. 1

Fig. 2

14

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110176762 A
- US 20150086149 A
- US 20030090286 A
- EP 2463695 A
- FR 1457748

**Littérature non-brevet citée dans la description**

- **P. LALANNE.** *An introduction to optical Bloch modes,* 2012
- **N. LAYADI et al.** *Plasma Etching in Microelectronics,* 2001